Europäisches Patentamt

European Patent Office

Office européen des brevets

(11) Publication number: **0 181 686**
**A1**

# EUROPEAN PATENT APPLICATION

(21) Application number: 85306257.8

(51) Int. Cl.⁴: **G 01 D 13/26**

(22) Date of filing: 04.09.85

(30) Priority: 15.09.84 GB 8423389

(43) Date of publication of application:
21.05.86 Bulletin 86/21

(84) Designated Contracting States:
AT BE CH DE FR GB IT LI LU NL SE

(71) Applicant: Lamb-Sceptre Design Centre Limited
Leyton Avenue
Mildenhall Suffolk IP28 7BL(GB)

(72) Inventor: Pigott, Norman Brian
95 Parsonage Lane Bishop's Stortford
Hertfordshire(GB)

(74) Representative: Matthews, Heather Clare et al,
Keith W Nash & Co Pearl Assurance House 90-92 Regent
Street
Cambridge CB2 1DP(GB)

(54) Monitoring apparatus.

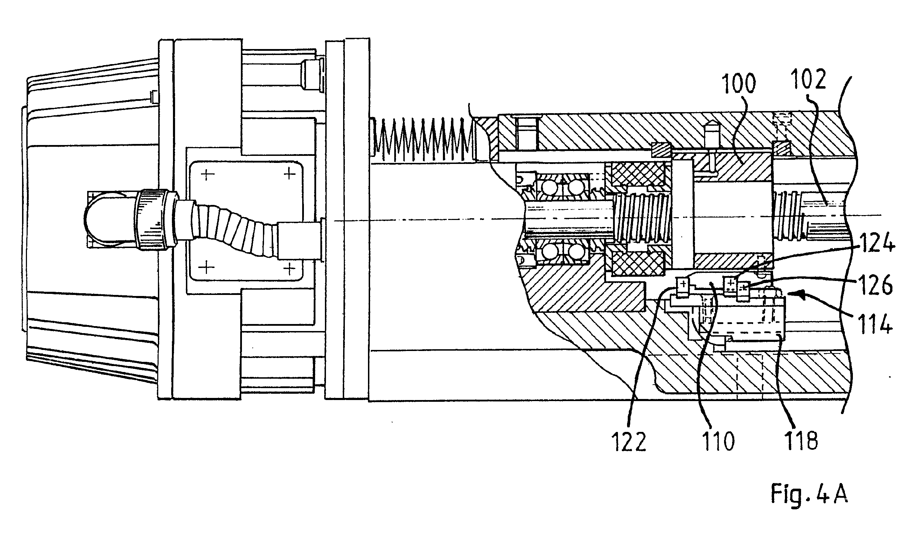

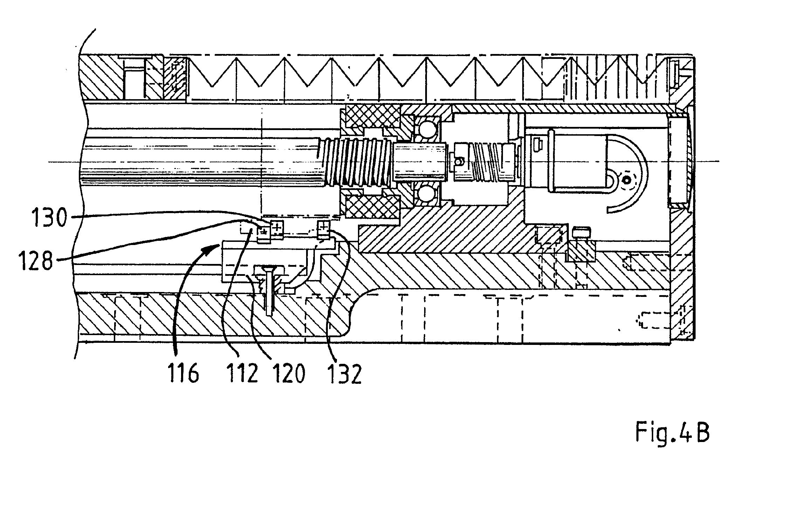

(57) To monitor back and forth travel between two relatively rotatable or linearly movable components, one component carries an interrupter (24 or 110, 112) and the other component carries a detector unit (32 or 114, 116). The interrupter has projecting parts at predetermined positions, and the passage of these parts past the detector unit is detected to monitor the relative position. The detector and the interrupter act via logic means to identify a datum position and to identify which side of the datum position the components lie, and also to identify when the components are approaching the ends of the range of travel in order to bring movement to a stop in a home position at each end of the range of travel (Figures 4A, 4B).

./...

Croydon Printing Company Ltd.

Fig.4A

Fig.4B

Title: Monitoring Apparatus

## Field of the invention

This invention relates to the monitoring of back and forth movement between two components. In particular, the invention provides apparatus for monitoring rotation or linear motion between home positions at the ends of the range of travel, and the apparatus is particularly suitable for monitoring such movement in a robotic machine.

## Summary of the invention

According to the present invention, there is provided apparatus for monitoring relative movement between two components, which relative movement can take place in either direction between home positions at opposite ends of the range of travel, the apparatus comprising proximity detectors mounted on one component, interrupting means carried by the other component, logic means for interpreting signals received from the detectors in order to identify in the region of each end of the range of travel, that the home position is being approached, and drive control means operative responsively to the logic means to stop relative movement of the two components at the home position.

The apparatus preferably includes mechanical stops for limiting overshoot beyond the home positions at the ends of the ranges of travel.

Preferably, the proximity detectors in combination with the logic means also serve to identify a datum position at the centre of the range of travel.

In an arrangement for monitoring rotation between the components which can rotate relatively to one another through angles up to 360°, the interruption means comprises a disk mounted on one component, the logic means, the disk and the proximity detectors co-operating to:

a) identify a datum position for the two components; and
b) identify which side of the datum position the components lie at any one time.

In a preferred form of the invention, the proximity detectors are optical detectors, and the disk has a rim which is cut away in different places. The logic means receives the signals from the detectors and, depending on the signals received and/or the sequence in which the signals were received, the logic means can identify the relative positions of the two components and/or can pass a corresponding signal to the drive means which drives one or both of the components in rotation.

In a most preferred form, the disk has a single narrow region of greatest diameter which co-operates with two spaced proximity detectors. In the datum position, the region of greatest disk diameter is at its most remote from the two corresponding detectors. However, as the region of greatest disk diameter approaches the detectors, it will cover one or the other detector (depending on the direction of rotation) before reaching the home position of the components, and this can be used to provide a signal to cease driving the components and/or to brake the components.

The datum position can be sensed using two proximity detectors which lie on different radii between a region of minimum disk diameter and a region of intermediate disk diameter. The two detectors preferably lie on a line which makes an angle with a disk radius extended through one or other of the detectors. The regions of minimum and of intermediate diameter of the disk merge through an edge region which also makes an angle with a radius of the disk, but the angle of this disk edge region is less than the angle of the line joining the detectors, so that the edge region is able to just cover one of the detectors whilst leaving the other detector just uncovered. With this arrangement, the datum position of the disk is clearly defined when one detector is covered and the other is uncovered, and when the disk has moved from its datum position, the direction in which it is moved is apparent from whether both of these detectors are covered or both are uncovered.

In another arrangement, intended for monitoring linear motion between two components, the interrupting means comprises a blade means carried by one component and the opposite ends of which cooperate with respective proximity detectors at the end of travel regions.

Said blade means preferably comprises two axially adjacent laterally spaced blades, one for cooperation with detectors at each end of the travel region.

- 4 -

Means may be provided for axial adjustment of the position of the detectors at least at one end of the travel region.

In this linear motion arrangement, the logic means preferably includes a resolver which counts divisions of the total range of travel. This enables a central datum position to be set by a given resolver count from a zero count to which the resolver is set at a home position. It is desirable for this purpose that the home position is defined by the detectors within axial limits of the same order of one division of the range of travel as counted by the resolver.

Most preferably, the detectors and the blade means also cooperate to detect overshoot, and the logic means is operable to cause the components to move reversely from a position of overshoot into the home position.

Overshoot detection may be analogously employed in the rotational movement monitor previously described.

Brief description of the drawings

The invention will now be further described, by way of example, with reference to the accompanying drawings, in which:

Fig 1 is an overall view of a joint for a robotic arm;
Fig 2 is a section of the joint on line II-II;
Fig 3 is an end view of the joint taken in the direction of the arrow III;
Fig 4A and 4B are axial cross-sections through a robotic machine, showing the right-hand side thereof and the left-

hand side; and
Fig 5 is a transverse cross-section through the machine of Figs. 4A, 4B.

## Detailed description of the drawings

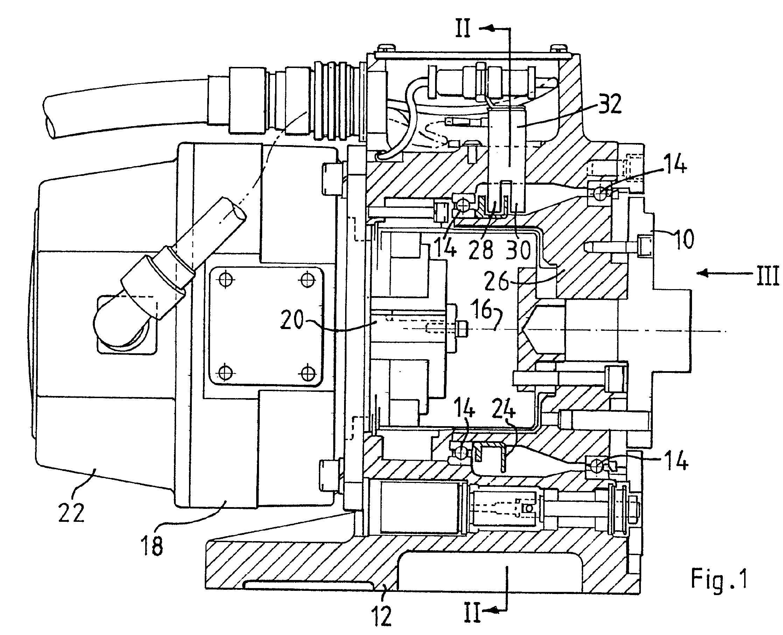

The joint shown in the Figs.1 to 3 has a first mounting face 10 to which a robot arm can be secured and a second mounting face 12 to which a second robot arm can be secured or alternatively by means of which the joint can be secured to a fixed mounting point. By means of bearings 14, the face plate 10 is rotatable about an axis

16 within the joint housing which includes the face 12. A drive motor is contained within a motor housing 18 and turns a shaft 20 which produces the desired rotation. Additionally, a brake 22 is provided in a further part of the joint to brake the shaft 20.

A disk 24 is mounted around the periphery of an internal component 26 which rotates with the face plate 10. The disk 24 passes between two arms 28 and 30 of a detector unit, 32. The detector unit 32 is mounted fast with the outer casing part and with the face plate 12.

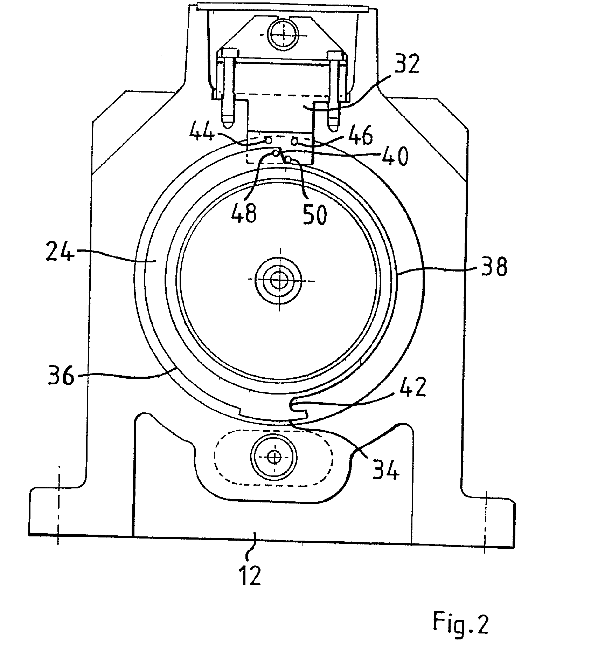

The disk 24 is seen better in Fig 2. In this figure it will be seen that the disk has a region 34 of greatest radius, a region 36 of intermediate radius and a region 38 of smallest radius. The regions 36 and 38 are joined by an inclined edge 40, and a cut out 42 exists between the regions 34 and 38.

The detector unit 32 has four optical detecting devices arranged as shown. The two outer most devices 44 and 46 lie on a radius where they will be masked by the region 34, but not by either of the regions 36 and 38. The two inner detecting devices 48 and 50 lie on radii such that they will be masked by the region 36 but not by the region 38. Furthermore, a line joining the devices 48 and 50 is at an angle to the edge 40 of the disk, the relative angles of these two lines being such that, in the position shown, which is the datum position, the device 48 is covered whilst the device 50 is open. It will be clear from the drawing that this condition exists only in one rotational position, and this rotational position is the datum position.

If the disk 24 turns clockwise, from its datum position, both the devices 48 and 50 will be covered, and corresponding signals will be sent to a processing unit (not shown). If the disk on the other hand rotates anticlockwise, both of the devices 48 and 50 will be open and again a corresponding signal will be sent. The arrangement of optical detecting devices 48 and 50 thus indicates whether the disk 24 is to the one side or to the other side of the datum position.

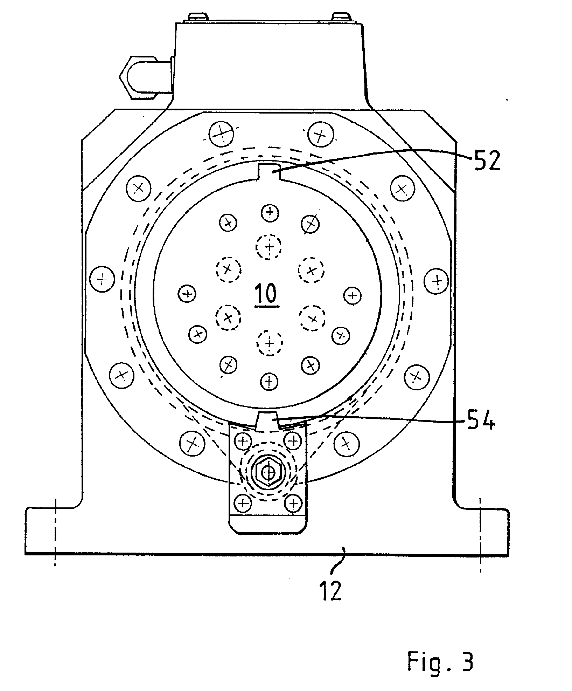

Figure 3 shows the face plate 10 with a lug 52 at one point on its periphery. On the housing, a corresponding lug 54 is provided. Engagement between the lugs 52 and 54 will physically prevent the face plate from making a complete revolution about the axis 16. However, to prevent damage being caused by the lugs 52 and 54 coming into contact, or at least violent contact, as the face plate rotates to a position near to its designed limit of rotational movement, i.e. its home position, the greatest diameter region 34 will obscure one or the other of the optical devices 44 and 46, depending on the direction of rotation. Once this occurs, a signal will be sent to the processing unit to stop further rotation of the face plate 10 and the disk 24. In this home position, the cut out 42 will co-operate with the detecting devices 48 and 50 in much the same way as the stop 40, so that one will be covered and the other will by uncovered. The detecting devices may thus also be used to detect overshoot before the physical limit set by the lugs 52 and 54, the processor utilising the detector signals to reverse the face plate into the home position from the position of overshoot.

The detecting devices 44, 46, 48 and 50 can be, for example, light emitting diodes in the head 28 which register with corresponding photocells in the head 30. Alternatively, however, other forms of proximity detectors may be used.

The apparatus described is fail-safe, and will always give an indication to the operator (or to the operating system of the robot) of the direction which the face plate 10 must be turned in order to effect a desired manoeuvre.

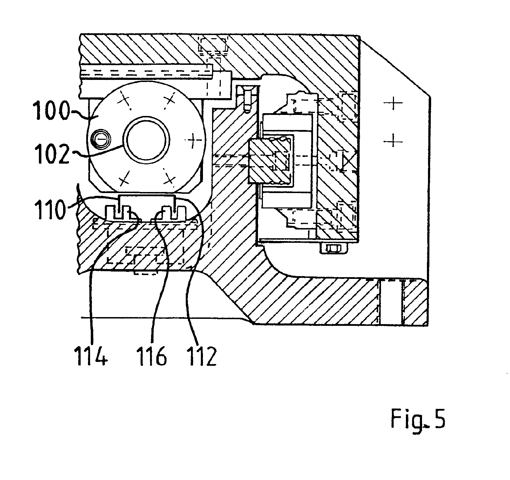

Turning now to Figs. 4A, 4B and 5, there is shown a robotic machine especially intended for use in automatic welding. Details of the machine are unimportant: however, it includes a carriage driver 100 which moves linearly along a shaft 102 responsively to the shaft being driven in rotation by an electric motor. It is necessary for the carriage to be accurately located at welding positions along its path of travel, in particular its two end of travel positions, and the invention is employed to monitor and control the travel which takes place.

Referring back to Fig.5, it can be seen that two blades 110, 112 depend from the underside of the carriage driver 100 and respectively cooperate with infra-red photodector means 114, 116 mounted on the framework of the machine. The blades 110, 112 are axially in general alignment, but are laterally spaced. The correspondingly laterally spaced detector means 114, 116 are axially spaced as shown in Figs.4A, 4B, being located at the two opposite end of travel regions, and in these figures both blades 110, 112 are again shown. However, for convenience of illustration the position of the blade 110 (Fig.4A) corresponds to one end of travel position and the position of the blade 112 (Fig.4B) corresponds to the other end of travel position, and it will be understood that in reality the blade 112 would be substantially hidden behind the blade 110.

Each photodetector means 114, 116, comprises a block 118, 120 mounted to the machine framework, with the block 120 being axially adjustable in position, and a set of three infra-red switches 122, 124, 126, and 128, 130, 132, releasably mounted on each block. Each such switch is a U-shaped element with the infra-red transmitter and the receiver carried by opposite arms for passage of the respective blade 110 or 112 between them. Facility may be provided changing the positions of the infra-red switches on the blocks. Generally, for control purposes, only four switches are connected for use, conveniently three at one end of the range of travel and one at the other end.

The blades 110, 112 are suitably shaped at their operative end regions to cooperate with the infra-red switches 122, 124, 126 and 132 in order to provide signals to a logic means which interprets the signals for the purpose of monitoring the position of the carriage driver.

Thus, when blade 110 first interrupts switch 124 but not switch 122, the home (required end of travel) position is being approached, whilst when both said switches are interrupted, the carriage driver has reached an overshoot position in advance of a mechanical stop. Blade 110 and switch 126, together with blade 112 and switch 132, provide corresponding detect signals at the other end region of the range of travel. The exact home position of each end is intermediate the above-described detect positions, and the detect signals are interpreted by the logic means, which includes a resolver controlling the motor drive to the shaft, so that the carriage driver is moved to the home position even if overshoot occurs first.

In conjunction with the resolver, the detectors and logic means also enable a central datum position of the carriage driver to be determined.

Thus, the resolver measures the angular position of the motor shaft, and the output is fed to an interface module providing:-

a) part turn resolution up to say 1/4096 of a revolution, turns count up to ± 2048 turns;
b) indication of which side of the datum this device is in;
c) indication when datum is being automatically set;
d) linear drive unit connections directly to the motor shaft.

The datum position is preset midway between the two home (end of travel) positions at 2048 turns, the resolver card count being set to zero at a home position. Having regard to this, the home position is defined generally midway between the two detect positions at each end of the range of travel, the axial distance between the two detect positions between about twice the distance corresponding to one division of the resolver (1/4096 of a turn).

The resolution provided in the above described manner is considerably greater than that which can be achieved with an optical encoder deriving signals from a castellated or apertured disc or the like. It is also possible, by comparing the outputs from two operative detectors, in respect of both phase and magnitude, to determine the exact position and the speed of movement of the driver part (carriage driver). This makes it possible to attain the home position or the datum position more readily, and in particular with minimum overshoot.

It is possible in some cases to utilise a single blade shaped at both ends as the interrupting means, although this may reduce the available range of travel on a machine of given dimensions.

Having described Figs. 4 and 5, it will be appreciated that the rotational movement monitor earlier described may employ similar photodetecting means to the linear motor embodiment. This may facilitate reduction of the size of the disc blade 34, thus making it possible to increase the angular range of travel.

Various modifications of the above identified arrangement are possible within the scope of the invention.

- 11 -

Claims:

1. Apparatus for monitoring relative movement between two components, which relative movement can take place in either direction between home positions at opposite ends of the range of travel, the apparatus comprising proximity detectors mounted on one component, and interrupting means carried by the other component, and being characterised by logic means for interpreting signals received from the detectors (32 or 114, 116) in order to identify, in the region of each end of the range of travel, that the home position is being approached, and drive control means operative responsively to the logic means to stop relative movement of the two components at this home position.

2. Apparatus according to claim 1, characterised by mechanical stops (52, 54) for limiting overshoot beyond the home positions at the ends of the ranges of travel.

3. Apparatus according to claim 1 or claim 2, characterised in that the proximity detectors in combination with the logic means also serve to identify a datum position at the centre of the range of travel.

4. Apparatus according to any of claims 1 to 3, for monitoring rotation between two components which can rotate relative to one another through angles of up to 360°, characterised in that the interrupting means comprises a disk (24) mounted on one component, the logic means, the disk and the proximity detectors co-operating to:

a) identify a datum position for the two components; and

b)    identify which side of the datum position the components lie at any one time.

5.   Apparatus as claimed in claim 4, wherein the proximity detectors are optical detectors, and the disc has a rim which is cut away in different places, characterised in that the datum position is sensed using two proximity detectors which lie on different radii between a region of minimum disk diameter and a region of intermediate disk diamer, said two detectors lying on a line which makes an angle with a disk radius extended through one or the other of the detectors, wherein the regions of minimum and of intermediate diameter of the disk merge through an edge region which also makes an angle with a radius of the disk, but the angle of this disk edge region is less than the angle of the line joining the detectors, so that the edge region is able to just cover one of the detectors whilst leaving the other detector just uncovered.

6.   Apparatus according to any of claims 1 to 3, for monitoring relative linear motion between two components, characterised in that the interrupting means comprises a blade means (110, 112) carried by the component and opposite ends of which cooperate with respective proximity detectors (114, 116) at the end of travel regions.

7.   Apparatus according to claim 6, characterised in that the blade means comprises two axially adjacent laterally spaced blades, one for cooperation with detectors at each end of travel region.

8.   Apparatus according to claims 6 or 7, characterised in that the logic means includes a resolver which counts divisions of the total range of travel, a central datum

0181686

- 13 -

position being set by a given resolver count to which the resolver is set at a home position.

9. Apparatus according to claim 14, characterised in that the home position is defined by the detectors within axial limits of the same order as one division of the range of travel as counted by the resolver.

10. Apparatus according to any of claims 6 to 7, characterised in that the detectors and the blade means also cooperate to detect overshoot, and the logic means is operable to cause the components to move reversely from a position of overshoot into the home position.

Fig.1

II

32

14

10

III

1/6

26

14 28 30

20

16

14 24

14

22

18

12

II

II

0181686

Fig.2

52

54

10

12

Fig. 3

Fig. 4 A

Fig.4B

0181686

Fig. 5

## DOCUMENTS CONSIDERED TO BE RELEVANT

EP 85306257.8

| Category | Citation of document with indication, where appropriate, of relevant passages | Relevant to claim | CLASSIFICATION OF THE APPLICATION (Int. Cl.4) |
|---|---|---|---|
| X | FR - E - 48 096 (KLEINSCHMIDT) | 1,2 | G 01 D 13/26 |
| A | * Fig. 11 * | 3-10 | |
| | ---- | | |
| | | | **TECHNICAL FIELDS SEARCHED (Int. Cl 4)** |
| | | | G 01 B 7/00 |
| | | | G 01 D 13/00 |
| | | | G 05 B 1/00 |
| | | | G 05 B 9/00 |
| | | | G 05 D 5/00 |

The present search report has been drawn up for all claims

| Place of search | Date of completion of the search | Examiner |
|---|---|---|
| VIENNA | 25-02-1986 | KUNZE |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82